# EUROPEAN PATENT SPECIFICATION

(11) **EP 0 695 675 B1**
(45) Date of publication and mention of the grant of the patent: **13.10.1999**
(21) Application number: 95111837.1
(22) Date of filing: 27.07.1995
(51) Int. Cl.: B60R 25/00, B60R 25/04

(54) **Anti-vehicle-thief apparatus and code setting method of the apparatus**
Diebstahlschutzeinrichtung für Kraftfahrzeuge und Verfahren zum Speichern eines Codes in einer solchen Vorrichtung
Dispositif anti-vol pour véhicule et procédé pour la mise en place du code dans un tel dispositif

(30) Priority: 02.08.1994 JP 18114694
(43) Date of publication of application: 07.02.1996
(73) Proprietor: NALDEC CORPORATION, Aki-gun, Hiroshima-ken (JP); MAZDA MOTOR CORPORATION, Aki-gun, Hiroshima-ken (JP)
(72) Inventor: Hirozawa, Manabu, Hiroshima-shi, Hiroshima-ken (JP); Okamitsu, Atsushi, Kure-shi, Hiroshima-ken (JP); Adachi, Kazufumi, Higashihiroshima-shi, Hiroshima-ken (JP); Tagawa, Hiroshi, Hiroshima-shi, Hiroshima-ken (JP)
(74) Representative: Reinhard - Skuhra - Weise & Partner

(56) References cited:
- WO-A-94/15048
- DE-A- 3 613 605
- DE-A- 4 242 492
- DE-A- 4 317 114
- DE-A- 4 407 692
- DE-C- 4 331 664
- FR-A- 2 441 036
- JP-A- 6 153 278
- JP-A- 63 024 066
- US-A- 4 920 338
- US-A- 4 990 906
- US-A- 5 477 214
- US-A- 5 479 154
- PATENT ABSTRACTS OF JAPAN vol. 018 no. 498 (M-1675) ,19 September 1994 & JP-A-06 167151 (NIPPONDENSO CO LTD) 14 June 1994,

## Description

### BACKGROUND OF THE INVENTION

The present invention relates to an anti-vehicle-thief apparatus and a code setting method of the apparatus.

Recently, burglaries of vehicles occur more frequently in many countries. In order to prevent burglaries, many types of burglar alarms and the like have been suggested, e.g., a key-less entry system and the like as a conventional burglar alarm. In a suggested key-less entry system, after a reset switch in the receiving side is powered on, an identification code sent from a transmitter is stored, as disclosed in Japanese Utility Model Application Laid-Open No. 2-105469. Further, an anti-vehicle-thief system for vehicles, so called an immobilizer unit, has been developed. In this system, if a burglar enters a vehicle and turns on the ignition switch, the system does not allow the engine of the vehicle to start.

However, there is a problem in the aforesaid conventional burglar alarms in which, when a burglar enters a vehicle and the burglar alarm sounds the alarm, since the alarm sound is frequently heard recently, passers-by do not give much attention to the alarm sound.

Further, in the key-less entry system, it is possible to prevent a burglar from entering a vehicle by a door. However, if the burglar breaks a window and enter the vehicle, it is not very difficult to turn on the ignition switch.

WO 94/15048 discloses a method apparatus for programming a spare key into a security system. Herein, a known key is inserted into a lock cylinder and the security device is triggered to read its encoded security code. If within a period of time an unknown key is inserted into the lock cylinder, the encoded security code of the unknown key is then inserted into the system memory. The new key security code becomes an additional acceptable security code to open the lock.

JP-6-167 151 A discloses an unboard keyless entry system. From this document it is known to turn on and off the ignition key a predetermined plurality of times for selecting a particular mode of a control means.

### SUMMARY OF THE INVENTION

The present invention has been made in consideration of the above situation, and has as an object to provide an anti-vehicle-thief apparatus and a corresponding code setting method of the apparatus capable of preventing a third person from using a key to enter a vehicle, thus preventing a burglary of the vehicle, as well as of easily registering codes specific to new keys, as well as of easily initializing codes specific to keys.

According to the present invention, the foregoing objects are attained by providing an anti-vehicle-thief apparatus as defined in claim 1.

Preferred embodiments are listed in the respective dependent claims 2 to 20.

Further, the foregoing objects are attained by providing a code setting method of anti-vehicle-thief apparatus as defined in claim 21.

Preferred embodiments are listed in the respective dependent claims, 22 to 29.

According to the apparatus and the method as described above, codes specific to keys can be set easily.

According to the apparatus and the method as described above, it is possible to prevent a third person from using keys having registered codes.

Further, in accordance with the present invention as described above, preferably, the predetermined operation is that an ignition switch is turned on and off a plurality of times by using the key having the registered code.

According to the apparatus and the method as described above, when a key is lost, codes specific to keys can be set easily.

### BRIEF DESCRIPTION OF THE DRAWING

Fig. 1 is a block diagram of an anti-vehicle-thief apparatus
Fig. 2 is an explanatory view of an operational sequence for determining ID data of a transponder 1, shown in Fig. 1, having a specific ID data;
Fig. 3 is an explanatory view of an operational sequence of an initial write process for writing the ID data in an assembly factory of the anti-vehicle-thief apparatus;
Fig. 4 is a flowchart showing an operational sequence of an ID code determination and the initial write process in an immobilizer unit;
Fig. 5 is a flowchart showing the operational sequence of the ID code determination and the initial write process in the immobilizer unit;
Fig. 6 is a flowchart showing an operational sequence of the ID code determination in an EGI (electronic gasoline injection control) unit;
Fig. 7 is a flowchart showing the operational sequence of the ID code determination in the EGI unit;
Fig. 8 is a flowchart showing an operational sequence of the initial write process in the EGI unit;
Fig. 9 is a timing chart of each operation in the transponder, an ignition switch, the immobilizer unit, and the EGI unit in the ID code determination;
Fig. 10 is a timing chart of each operation in the transponder, the ignition switch, the immobilizer unit, and the EGI unit in the initial write process for ID codes;
Fig. 11 is an explanatory view of a processing sequence for changing a registered ID code according to the invention;
Fig. 12 is a flowchart showing an operational sequence of an additional write process in the immobilizer unit; according to the invention;
Fig. 13 is a flowchart showing the operational sequence of the additional write process in the immobilizer unit;
Fig. 14 is a flowchart showing the operational sequence of the additional write process in the immobilizer unit;
Fig. 15 is a flowchart showing an operational sequence of the additional write process in the EGI unit; and
Fig. 16 is a timing chart of each operation in the transponder, the ignition switch, the immobilizer unit, and the EGI unit in the operation for adding a registration of a key (changing ID codes, additional writing).

### DETAILED DESCRIPTION OF THE PREFERRED EMBODIMENT

Preferred embodiments will be described in detail in accordance with the accompanying drawings.

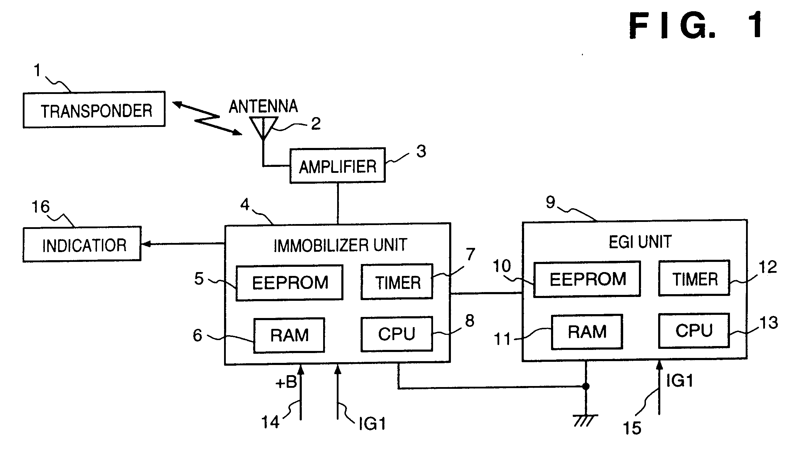

Fig. 1 is a block diagram of an anti-vehicle-thief apparatus of the present invention in an embodiment. A configuration of the anti-vehicle-thief apparatus of the present invention will be explained referring to Fig. 1. The anti-vehicle-thief apparatus used in the embodiment is a system comprising a transponder 1, an antenna 2 for receiving signals from the transponder 1, an amplifier 3 for amplifying the signals received by the antenna 2, an immobilizer unit 4 which is controlled in accordance with the signals from the amplifier 3, and an EGI unit 9 for controlling the engine. More specifically, the transponder 1 is included in a key, used by a driver, for controlling the ON and OFF of an ignition switch of a vehicle. The antenna 2 is an ignition coil antenna which is coupled with the ON and OFF of the ignition switch. The amplifier 3 amplifies the signal, applied when the coil antenna starts operating, to a fixed voltage so as to obtain a high voltage.

The immobilizer unit 4 is a controller, having been developed in Europe for preventing burglary, which prohibits to start the engine.

The immobilizer unit 4 is supplied with power from a battery (+B) (not shown) via a supply line 14 and a power supply (not shown) which supplies power in accordance with the ON or OFF state of the ignition switch via a supply line 15. The immobilizer unit 4 is given with ON or OFF data of the ignition switch in accordance with the battery (+B) connected via the supply line 14 and the power supply connected via the supply line 15 as well as ID data from the transponder 1 in accordance with the voltage amplified by the amplifier 3. Thereafter, the immobilizer unit 4 transmits a predetermined control signal to the EGI unit. Further, since the immobilizer unit 4 is connected to the battery 14, when the engine is stopped and the ignition switch is turned off, electricity is kept supplied to the immobilizer unit 4. Accordingly, the immobilizer unit 4 maintains a stand-by state. Furthermore, the immobilizer unit 4 is also connected to the indicator 16 which is provided within a vehicle, and it controls the ON and OFF of internal lights on the basis of the ID data sent from the transponder 1.

The EGI unit 9 which electronically controls revolutions per minute of the engine, the amount of fuel injection, and the like.

A configuration of the EGI unit 9 is similar to the one of the immobilizer unit 4, and comprises an EEPROM 10 for storing data in advance, RAM 11 for temporarily storing data during transmitting/receiving data to/from the immobilizer unit 4, a timer 12 which sends timing data of the transmission and reception of data stored in the above memories, and CPU 13 for controlling transmission and reception of data to/from the immobilizer unit 4 in accordance with the timing data from the timer 12. Further, the EGI unit 9 receives a predetermined control signal from the immobilizer unit 4 and controls the starter and the amount of fuel injection in accordance with the control signal. However, deferring from the immobilizer unit 4, the EGI unit 9 is connected to only the switch power supply 15 which is coupled with ON and OFF of the ignition switch. Therefore, when the engine is stopped and the ignition switch is turned off, electricity is not supplied to the EGI unit 9.

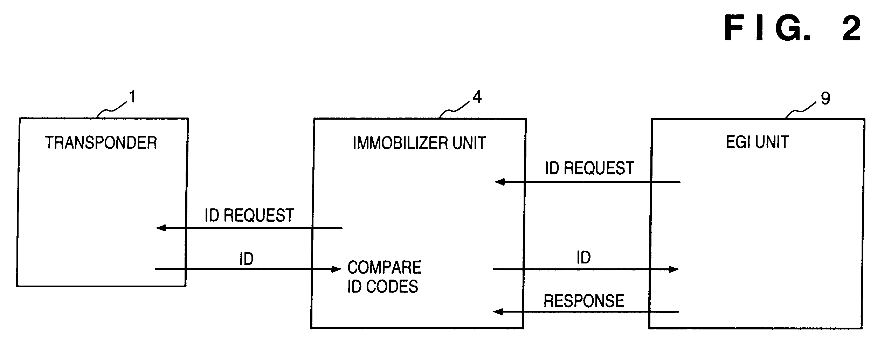

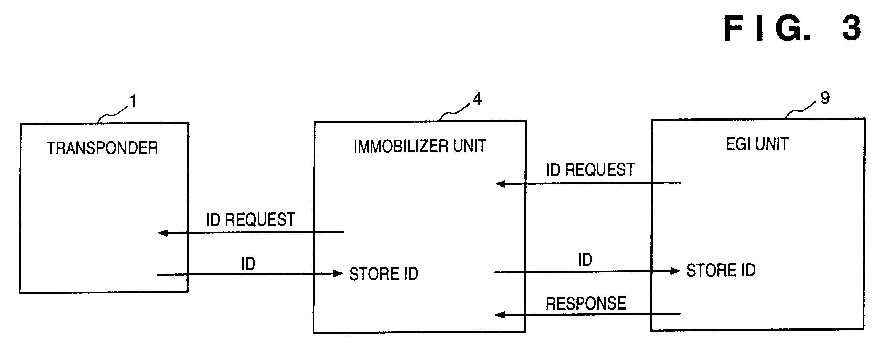

Next, referring to Figs. 2 and 3, transmission and reception of data between the transponder 1, the immobilizer unit 4, and the EGI unit 9 will be described. Fig. 2 is an explanatory view of an processing sequence of ID data determination in the transponder 1 which has ID data specific to it. Fig. 3 is an explanatory view of an operational sequence of an initial write process for writing the ID data in an assembly factory into the anti-vehicle-thief apparatus of the present invention.

### 〈Determination of an ID code〉

Referring to Fig. 2, when the transponder is inserted into the ignition keyhole and turned to a position where the ignition switch is turned on, the immobilizer unit 4 issues an ID request to the transponder 1. Then the transponder 1 sends an ID signal, which is used as a trigger signal for the immobilizer unit 4, to the immobilizer unit 4. The immobilizer unit 4 temporarily stores the sent ID code of the transponder 1 in RAM 6 in the immobilizer unit 4. This operation is repeated twice so as to cope with an unexpected trouble during communication. Thereafter, ID codes, registered in an EEPROM 5 in the immobilizer unit 4, and the ID code sent from the transponder 1 are compared in CPU 8. At this time, the EGI unit 9 is in a state of waiting for the immobilizing function to be released. In this state, a counter starts counting and whether or not a predetermined condition is satisfied in a predetermined time period is determined. If the condition is satisfied, the EGI unit 9 issues a request to the immobilizer unit 4 for sending the ID code. In response to the ID code request from the EGI unit 9, the immobilizer unit 4 sends the ID code to the EGI unit 9 on the basis of a comparison result of the ID codes. The EGI unit 9 stores the ID code sent from the immobilizer unit 4 in the RAM 11. These operation is repeated twice, and the ID code from the immobilizer unit 4 and the ID code registered in the EEPROM 10 in the EGI unit 9 are compared, and the comparison result of the ID codes is sent to the immobilizer unit 4.

### 〈Initial Write Process〉

Next, a processing sequence of initial write process for data when no ID code is written in the EEPROMs of the immobilizer unit 4 and the EGI unit 9. Similarly to the process explained with reference to Fig. 2, in a processing shown in Fig. 3, when the transponder is inserted into the ignition keyhole and turned to a position where the ignition switch is turned ON, the immobilizer unit 4 issues an ID request to the transponder 1. Then the transponder 1 sends an ID signal to the immobilizer unit 4. The immobilizer unit 4 temporarily stores the sent ID code of the transponder 1 in the RAM 6. This operation is repeated twice so as to cope with an unexpected trouble during communication. Thereafter, whether or not the ID code has already been registered in the EEPROM 5 in the immobilizer unit 4 is determined. In a case where no ID code is registered in the EEPROM 5, the ID code stored in the RAM 6 is registered in the EEPROM 5. By this time, the EGI unit 9 has issued an request for an ID code to the immobilizer unit 4. In response to the ID code request from the EGI unit 9, the immobilizer unit 4 sends the ID code to the EGI unit 9. The EGI unit 9 then stores the ID code sent from the immobilizer unit 4 in the RAM 11. This operation is repeated twice, and whether or not the two ID codes sent from the immobilizer unit 4 in the repeated operation are identical to each other is determined. If they are identical and no ID code is registered in the EEPROM 10 in the EGI unit 9, the ID code is registered there. Then, the EGI unit 9 sends a signal to inform the immobilizer unit 4 that the code is registered.

### 〈Operational Sequence of ID Determination in the Immobilizer unit〉

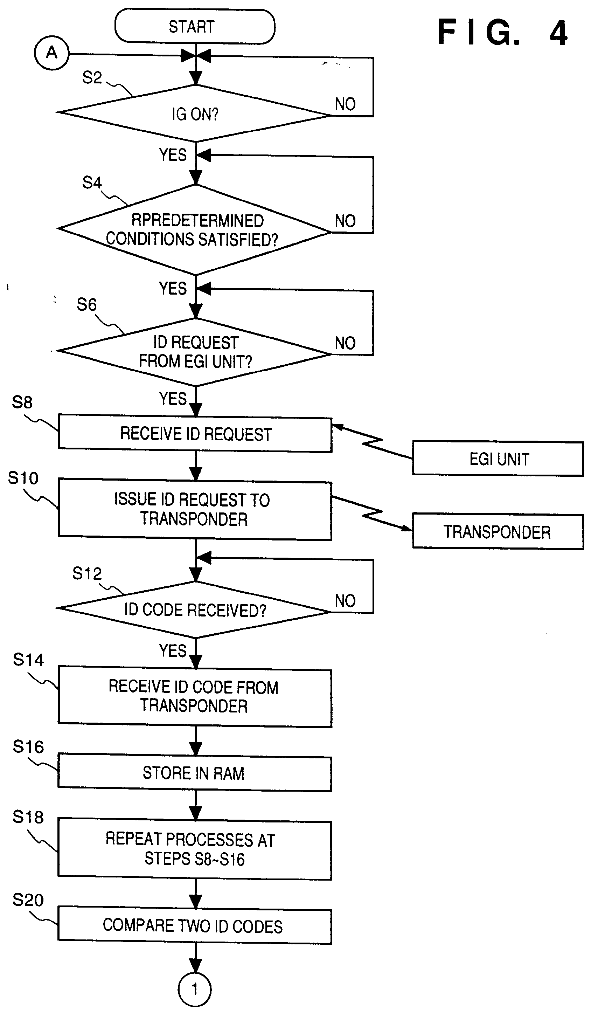

Next, referring to Figs. 4 to 8, an operational sequence of the ID code determination and of the initial write process will be described in detail.

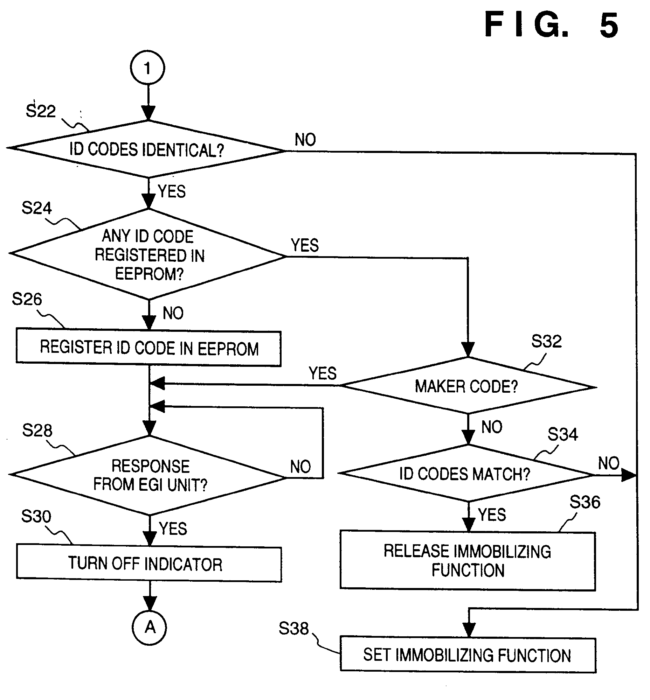

Figs. 4 and 5 are flowcharts showing the operational sequence of the ID code determination and the initial write process in an immobilizer unit. In Figs. 4 and 5, when the process is started, whether or not the ignition switch is turned ON by the transponder and the engine is started is determined at step S2. When it is determined that the ignition switch is ON (YES at step S2), the process proceeds to step S4. Whereas when it is determined that the ignition switch is not ON (NO at step S2), then the process returns to the beginning of the process. At step S4, whether or not predetermined conditions (whether or not the engine is in a stable state in which 500 rpm and a voltage of greater or equal to 10V) are satisfied is determined. If the conditions are satisfied (YES at step S4), the process proceeds to step S6. In contrast, if they are not satisfied (NO at step S4), the process returns to the beginning of step S4. At step S6, whether or not an ID request is issued by the EGI unit is determined. When it is determined that the ID request is issued, (YES at step S6), the process moves to step S7. At step S7, an indicator is turned ON and the process proceeds to step S8. Whereas if it is determined that the ID request is not issued (NO at step S6), the process returns to the beginning of step S6. At step S8, the ID request is received from the EGI unit. Thereafter at step S10, in response to the ID request at step S8, the ID request is issued to the transponder. Then, the process proceeds to step S12. At step S12, whether or not an ID code is received from the transponder to which the ID request is issued is determined. If it is (YES at step S12), the process proceeds to step S14, whereas if it is not (NO at step S12), the process returns to the beginning of step S12, and the immobilizing function is set after the process at step S12 is repeated a predetermined number of time or a predetermined time period has elapsed. Then at step S14, the ID is received from the transponder. At step S16, the ID code received from the transponder is temporarily stored in the RAM provided in the immobilizer unit. At step S18, steps S8 to S16 are repeated once more. As a result, two ID codes received from the transponder are stored in the RAM. At step S20, the stored two ID codes are compared. Thereafter, the process moves to step S22 where whether or not the two ID codes stored in the RAM are identical to each other is determined. If they are (YES at step S22), the process proceeds to step S24. At step S24, whether or not any ID code is registered in the EEPROM provided in the immobilizer unit is determined. More specifically, whether or not ID code data is any value other than 0 or F is determined. If it is determined that no ID code is registered in the EEPROM of the immobilizer unit (NO at step S24), the process proceeds to step S26. At step S26, the ID code stored in the RAM is registered in the EEPROM of the immobilizer unit and sent to the EGI unit. The process goes to step S28 where whether or not there is any response to the ID code transmission from the EGI unit. If there is (YES at step S28), then the process proceeds to step S30. At step S30, if the response from the EGI unit indicates that the ID code is registered in the EEPROM, then the indicator is turned off and the process returns to step S2. Whereas, if there is no response from the EGI unit (NO at step S28), the process returns to the beginning of step S28.

On the contrary, at step S22, when the two ID codes stored in the RAM do not match each other (NO at step S22), the process goes to step S38 where the immobilizing function is set and the immobilizer unit is locked so that the ignition can not be turned ON (i.e., the engine can not be started), and a lock command is transmitted to the EGI unit.

Further, in a case where an ID code is registered in the EEPROM of the immobilizer unit (YES at step S24), then the process proceeds to step S32 where whether or not the ID code stored in the EEPROM is set by the maker (i.e., maker code) is determined. If it is determined that the ID code stored in the EEPROM is a unit maker code (YES at step S32), the process moves to step S28. Whereas, if the ID code stored in the EEPROM is not the unit maker code (NO at step S32), then the process proceeds to step S34 where whether or not the code stored in the RAM matches the code registered in the EEPROM is determined. If it does (YES at step S34), then the process moves to step S36 where the immobilizing function is released and normal engine control is permitted. On the other hand, when it is determined that the code does not match (NO at step S34), the process moves to step S38 where the immobilizing function is set and the immobilizer unit is locked so that the engine does not start even if the ignition switch is turned ON.

In the aforesaid operational sequence in the immobilizer unit, the processes at steps S24 to S30 are of the initial write process for the ID code, and the processes at steps S22 and S38 and steps S24 and S32 to S36 are of the normal ID code determination process.

### 〈Operational Sequence of ID determination in the EGI unit〉

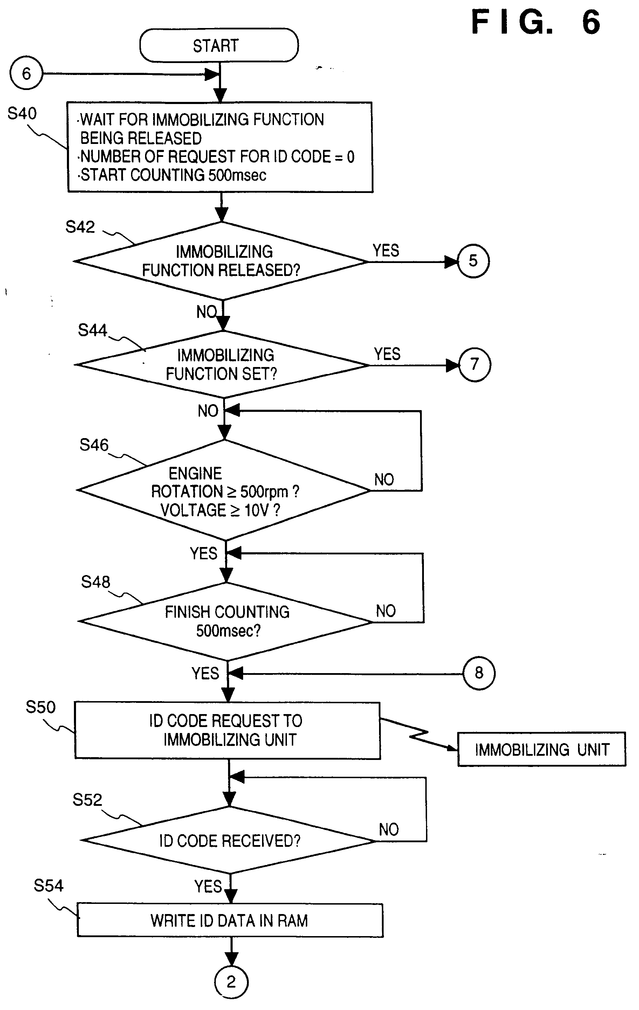

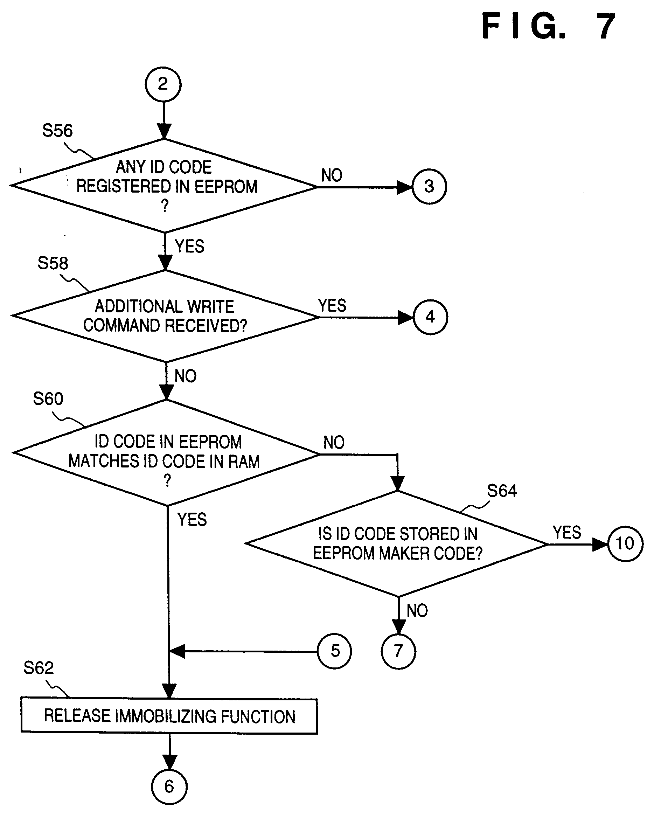

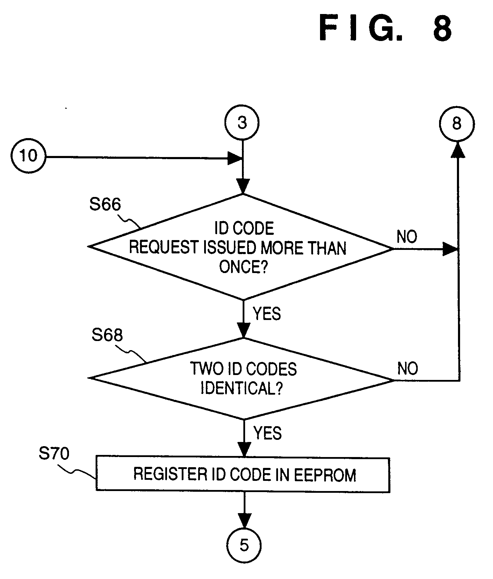

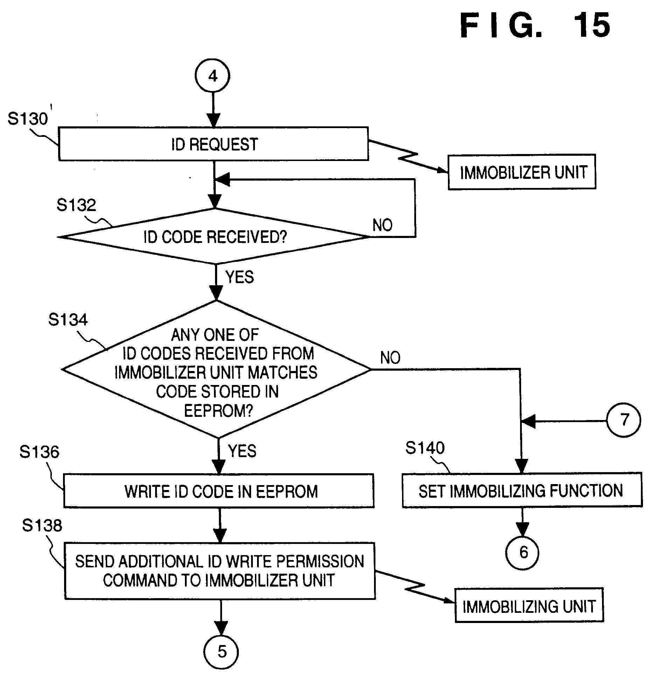

Next, a processing sequence for determining an ID code in the EGI unit will be explained. Figs. 6 and 7 are flowcharts showing a determination sequence for determining the ID code in the EGI unit. In Figs. 6 and 7, when the process is started, since the immobilizing function is set during the ignition switch is OFF, the EGI unit waits for an instruction to release the immobilizing function at step S40, and the timer starts counting until 500 msec. since the ignition is on under a state where the number of request for the ID code to the immobilizer unit is 0. At step S42, whether or not the immobilizing function is released is determined. If it is not (NO at step S42), the process proceeds to step S44, whereas if it is (YES at step S42), then the process moves to step S62 which will be described later. At step S44, whether or not the immobilizing function is set is checked. If it is not (NO at step S44), the process proceeds to step S46, whereas if it is (YES at step S44), the process goes to step S140 in Fig. 15 which will be explained later. At step S46, whether or not predetermined conditions, namely the revolution of the engine is greater or equal to 500 rpm and voltage is greater or equal to 10V, are satisfied is determined. If they are (YES at step S46), the process proceeds to step S48, whereas if they are not (NO at step S46), the process returns to the beginning of step S46. At step S48, whether or not 500 msec. has been counted by the timer which started at step S40 is determined. If it has (YES at step S48), the process proceeds to step S50, whereas if it has not, the process returns to the beginning of step S48. At step S50, the EGI unit issues an ID code request to the immobilizer unit. Thereafter, the process proceeds to step S52 where whether or not an ID code has been transmitted from the immobilizer unit to the EGI unit is determined. If it has (YES at step S52), the process proceeds to step S54, whereas if it has not (NO at step S52), the process returns to the beginning of step S52. At step S54, the ID data, responded by the immobilizer unit, is temporally stored in the RAM provided in the EGI unit. Then, the process proceeds to step S56. At step S56, whether or not an ID code is registered in the EEPROM provided in the EGI unit is determined. More specifically, whether or not ID code data is any values other than 0 or F is judged. If it is determined that an ID code is registered (YES at step S56), the process proceeds to step S58. At step S58, whether or not an additional write command is received from the immobilizer unit is determined. Regarding the additional write command when the determination at step S58 is YES, it will be explained later. If the additional write command is not received (NO at step S58), the process proceeds to step S60 where whether or not the ID code stored in the RAM matches the ID code registered in the EEPROM in the EGI unit is determined. If they match (YES at step S60), the process proceeds to step S62 where the immobilizing function is released and a normal EGI control is performed. Further, at step S60, if the ID code stored in the RAM does not match the ID code registered in the EEPROM in the EGI unit (NO at step S60), the process proceeds to step S64. At step S64, whether or not the ID code stored in the EEPROM provided in the EGI unit is an ID code set by a unit maker (maker code) is determined. If it is (YES at step S64), the process goes to step S66 in Fig. 8, whereas if it is not (NO at step S64), the process moves to step S140 in Fig. 15 which will be explained later.

### 〈Operational Sequence of an Initial Write Process in the EGI unit〉

Next, referring to a flowchart in Fig. 8, an operational sequence of an initial write process in the EGI unit will be explained. When it is determined that no ID code is registered in the EEPROM in the EGI unit at step S56 in Fig. 7 (NO at step S56), the process moves to step S66 in Fig. 8. At step S66, whether or not the EGI unit has issued the ID code request more than once to the immobilizer unit is determined. If it has (YES at step S66), the process proceeds to step S68, whereas if it has not (ID code request is issued once, and NO at step S66), the process returns to step S50 in Fig. 6. At step S68, whether or not the two ID codes stored in the RAM are identical to each other is determined. If they are (YES at step S68), the process proceeds to step S70 where the ID code stored in the RAM in the EGI unit is registered in the EEPROM. Thereafter, the process returns to step S62 in Fig. 7. Whereas, if it is determined that the two ID codes stored in the RAM are not identical (NO at step S68), the process returns to step S50.

As described above, the operational sequences explained with reference to Figs. 6 to 8 are for the ID determination and for the initial write process in the EGI unit.

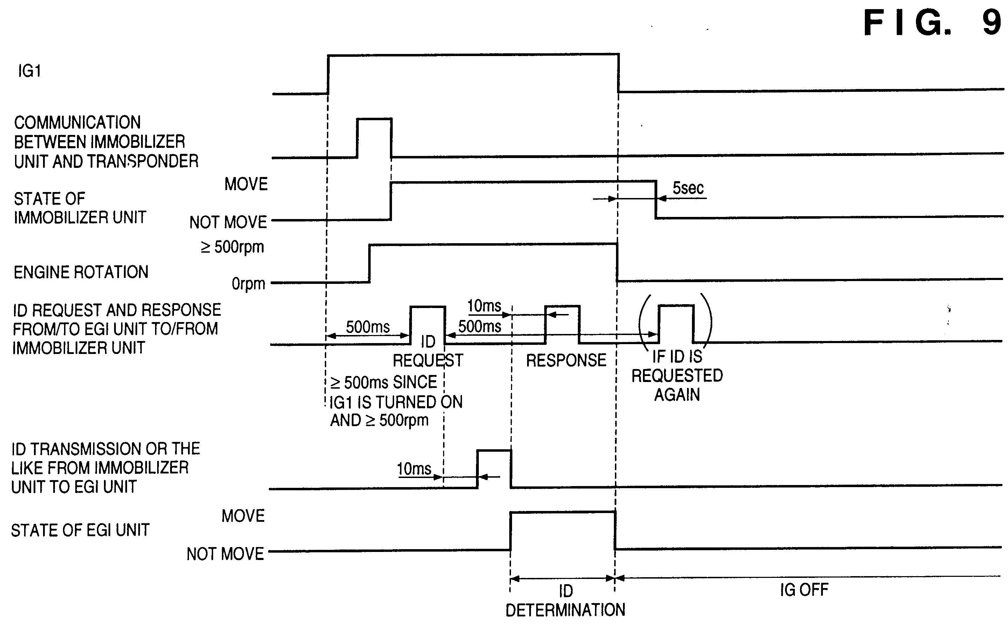

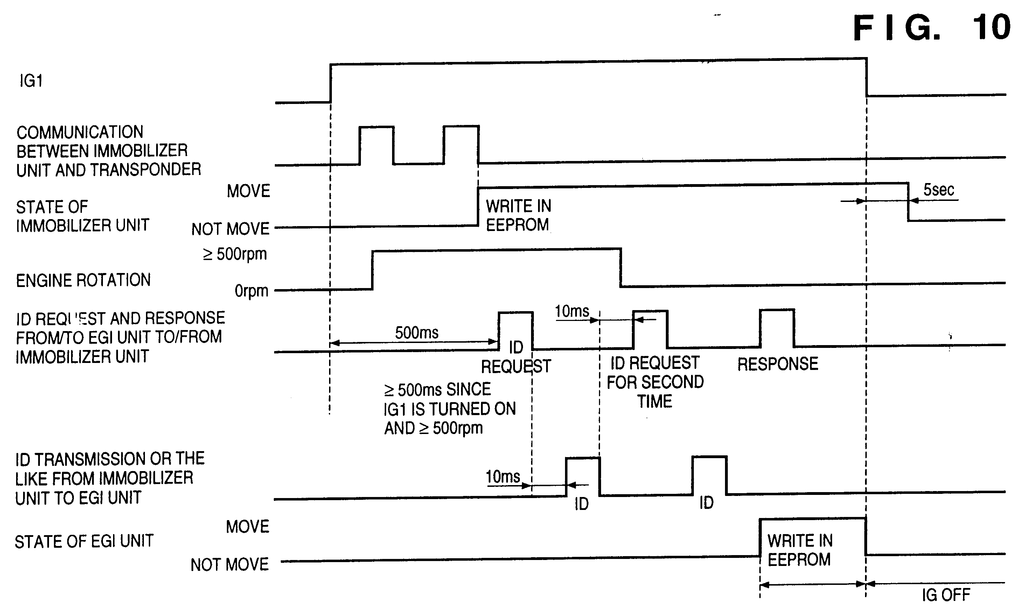

Fig. 9 is a timing chart of each operation in the transponder, an ignition switch, the immobilizer unit, and the EGI unit in the ID code determination. Referring to Fig. 9, the immobilizer unit issues an ID request to the transponder when the ignition switch is turned ON, and sends and receives ID code to/from the EGI unit under a stable state in which the number of engine rotation is greater or equal to 500 rmp. Fig. 10 is a timing chart of each operation in the transponder, the ignition switch, the immobilizer unit, and the EGI unit in the initial ID code write process. Referring to Fig. 10, when the ignition switch is turned on, the immobilizer unit issues an ID request to the transponder. Then, if no ID code is registered in the EEPROM of the immobilizer unit, the ID code is registered in the EEPROM of the immobilizer unit, and sent to the EGI unit responding to the ID request from the EGI unit. When the ID is not registered in the EEPROM of the EGI unit, the EGI unit registers the ID code sent from the immobilizer unit in the EEPROM of the EGI unit.

As described above, since maker codes can be set by an immobilizer unit maker and an EGI unit maker for testing in a factory, and ID codes can be changed at a dealer or the like after an anti-vehicle-thief system is assembled, the system can be mass-produced.

### 〈Operational Sequence of an Additional Write Process〉 according to the invention.

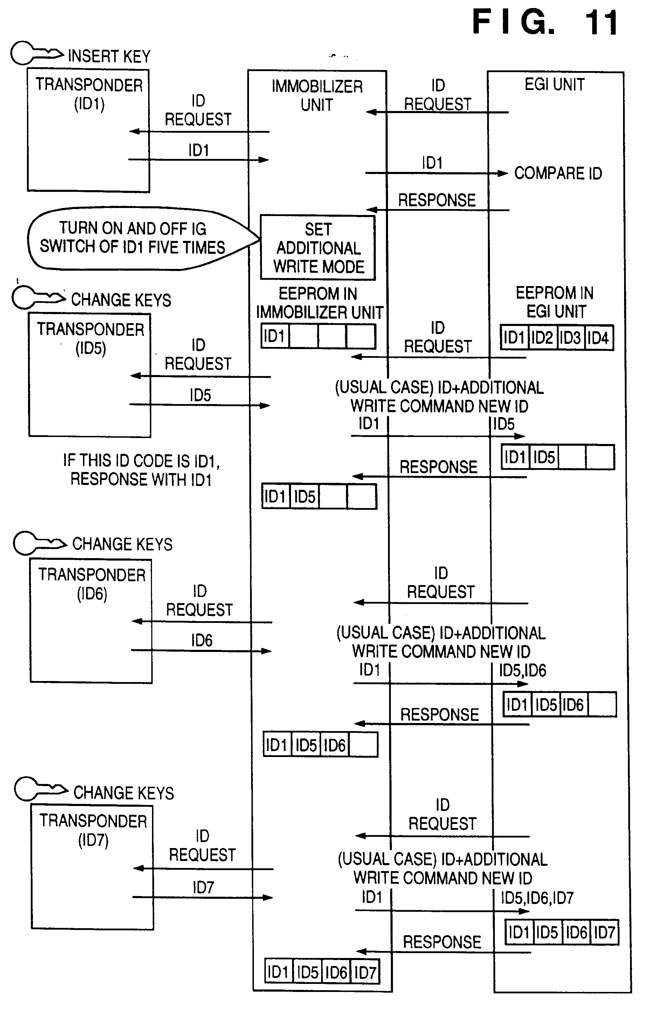

Next, an operational sequence of changing registered ID codes will be explained. This process is used in a case where, for instance, when there are transponders 1, 2, 3, and 4 having different ID codes from each other (more specifically keys 1, 2, 3, and 4 having ID1, ID2, ID3 and ID4, respectively), the keys 2, 3, and 4 are stolen or missing out of the aforesaid four keys and new keys 5, 6, and 7 are to be used instead so that a vehicle is not stolen by a third person by using the missing keys, ID codes registered in the immobilizer unit and the EGI unit are changed. Fig. 11 is an explanatory view of a processing sequence for changing registered ID codes. Referring to Fig. 11, a case where ID1, ID2, ID3, and ID4 registered as ID codes are changed to ID1, ID5, ID6 and ID7 will be described. In Fig. 11, since the ID code of the key 1 registered before changing codes is still efficient, thus the key 1 is used first. First, the key 1 is inserted in a keyhole and the engine is started. Then, after the immobilizing function is released, the ignition switch is turned on and off five times. The immobilizer unit is changed to a additional write mode in accordance with this on and off operation. Thereafter, the ID codes other than ID 1 out of ID 1 to ID4 registered in each EEPROM in the immobilizer unit and the EGI unit are cleared. Then the key 1 is pulled out, and the new key 5 is inserted in the keyhole in a predetermined time period (about 4 seconds). Since ID requests are issued from the immobilizer unit to the transponder 5 and from the EGI unit to the immobilizer unit, the transponder 5 transmits its ID code, ID5, to the immobilizer unit. The immobilizer unit receives the ID code ID5 and stores it in the EEPROM. Thereafter, the immobilizer unit transmits the ID codes ID1 and ID5 to the EGI unit in correspondence to the ID request from the EGI unit. The EGI unit receives ID1 and ID5 and registers in the EEPROM. Then, the EGI unit response to the immobilizer unit that it received the ID code, and issues another ID request. At this time, the ID codes registered in the immobilizer unit and the EGI unit is ID1 and ID5 only.

Likewise, after the key 5 is pulled out, the key 6 is inserted into the keyhole in a predetermined time period. Since ID requests are issued from the immobilizer unit to the transponder 6 and from the EGI unit to the immobilizer unit, the transponder 6 transmits its ID code, ID6, to the immobilizer unit. Since the EGI unit is issuing the ID request to the immobilizer unit, the immobilizer unit receives ID6 and stores it in the EEPROM. Then the immobilizer unit transmits the ID codes ID1, ID5, and ID6 to the EGI unit in correspondence to the ID request from the EGI unit. The EGI unit receives ID1, ID5 and ID6 and registers them in the EEPROM. Then, the EGI unit response to the immobilizer unit that it received the ID codes, and issues another ID request. At this time, the ID codes registered in the immobilizer unit and the EGI unit is ID1, ID5, and ID6.

Similarly, after the key 6 is pulled out, the key 7 is inserted into the keyhole in a predetermined time period. Since ID requests are issued from the immobilizer unit to the transponder 7 and from the EGI unit to the immobilizer unit, the transponder 7 transmits its ID code ID7 to the immobilizer unit. Since the EGI unit is issuing the ID request to the immobilizer unit, the transponder 7 sends a new ID code ID7 to the immobilizer unit. Thereafter, the immobilizer unit receives ID7 and stores it in the EEPROM . Then the immobilizer unit transmits the ID codes ID1, ID5, ID6, and ID7 to the EGI unit in correspondence to the ID request from the EGI unit. The EGI unit receives ID1, ID5, ID6, and ID7 and registers them in the EEPROM. Then, the EGI unit response to the immobilizer unit that it received the ID codes. At this time, the ID codes registered in the EGI unit is ID1, ID5, ID6, and ID7, thus completing change of all the ID codes which are to be changed.

### 〈Operational Sequence of an Additional Write Process in the Immobilizer Unit〉 according to the invention.

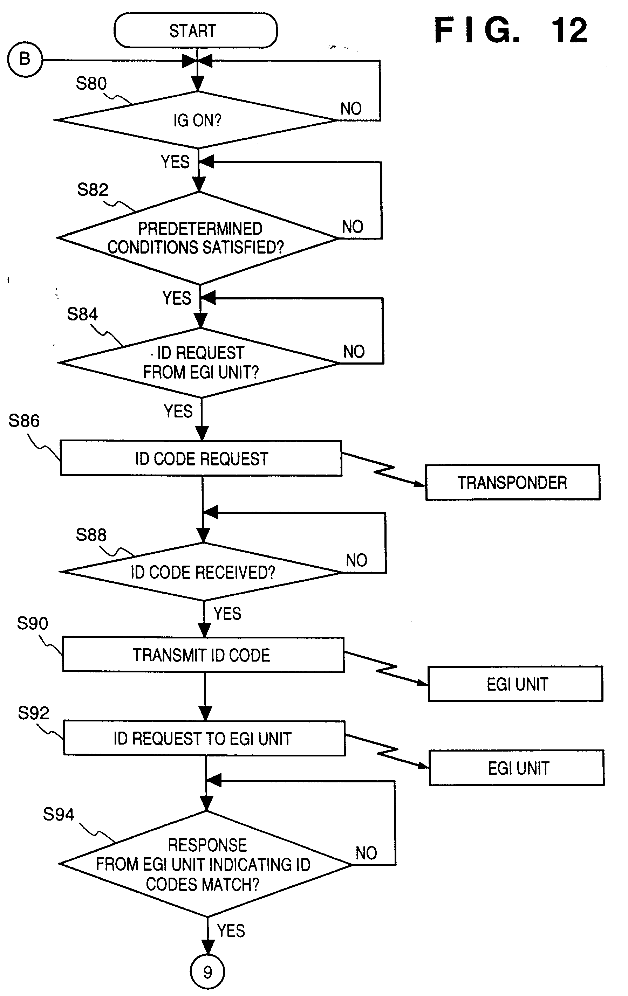

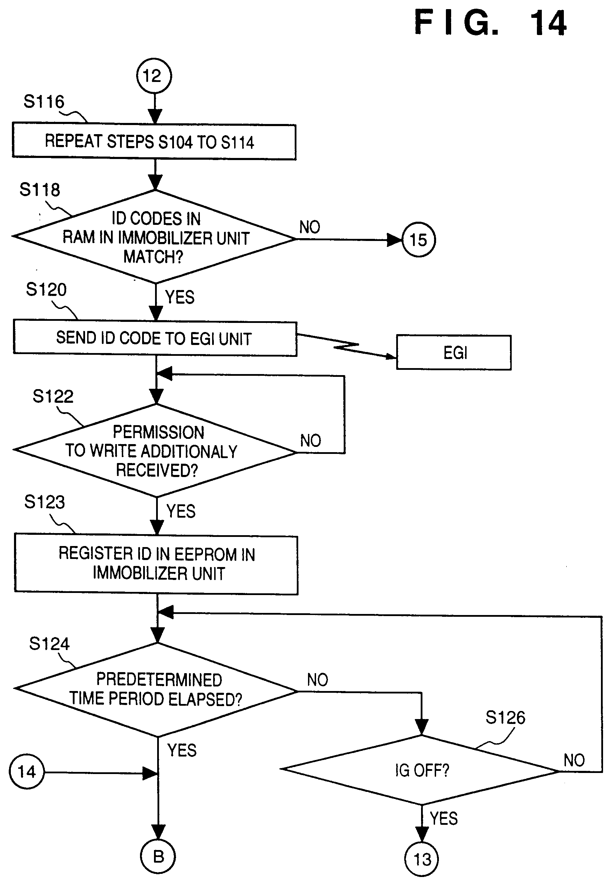

Next, an operational sequence of an additional write process in the immobilizer unit will be described. Figs. 12 to 14 are flowcharts showing the operational sequence of the additional write process in the immobilizer unit. Referring to Figs. 12 to 14, after the process starts, whether or not the ignition switch is turned ON by using a transponder is determined at step S80. If it is (YES at step S80), the process proceeds to step S82, whereas if it is not (NO at step S80), the process returns to the beginning of this process. At step S82, whether or not predetermined conditions (engine revolution is greater or equal to 500 rpm and voltage is greater or equal to 10V) are satisfied is determined. If they are (YES at step S82), the process proceeds to step S84, whereas if they are not (NO at step S82), the process returns to the beginning of step S82. At step S84, whether or not the ID request is issued by the EGI unit is judged. If it is (YES at step S84), the process proceeds to step S86, whereas if it is not (NO at step S84), the process returns to the beginning of step S84. At step 586, the immobilizer unit issues an ID request to the transponder, and the process proceeds to step S88. At step S88, whether or not the ID code is responded from the transponder is determined. If it is (YES at step S88), the process proceeds to step S90, whereas if it is not (NO at step S88), the process returns to the beginning of step S88. After the process at step S88 is repeated more than predetermined times or a predetermined time period has elapsed, the immobilizing function is set. At step S90, the immobilizer unit responses to the ID request issued by the EGI unit. Thereafter, the process proceeds to step S92 where the immobilizer unit issues an ID request to the EGI unit. At step S94, whether or not a response indicating that the ID codes match from the EGI unit is received is determined. If it is (YES at step S94), the process proceeds to step S96, whereas if it is not (NO at step S94), the process returns to the beginning of step S94. After the process at step S94 is repeated more than predetermined times or a predetermined time period has elapsed, the immobilizing function is set. At step S96, in correspondence with the response from the EGI unit indicating that the ID codes match, whether or not the ignition switch is turned on and off five times by using the inserted key is determined. If it is (YES at step S96), the process proceeds to step S98, whereas if it is not (NO at step S96), the additional write process for ID codes is not performed and the process returns to step S80. At step S98, the key which made the ignition switch turned on and off five times in a predetermined time period (e.g., about 4 seconds) is pulled off, then other key having a different ID code is inserted in the keyhole, and whether or not the ignition switch is turned on is determined. If it is (YES at step S98), the process proceeds to step S100, whereas if it is not (NO at step S98), the additional write process for ID codes is not performed and the process returns to step S80. Then at step S100, the timer provided in the immobilizer unit is reset and, at step S102, it is started. Thereafter, the process proceeds to step S104 where whether or not an ID request from the EGI unit is received is determined. If it is (YES at step S104), the process proceeds to step S106, whereas if it is not (NO at step S104), the process returns to the beginning of step S104. At step S106, the immobilizer unit sends a response to the ID request issued by the EGI unit, and at step S108, transmits an additional write command to the EGI unit. At step S109, all the ID codes except the ID code of the transponder which is under use are deleted. At step S110, the immobilizer unit transmits the ID request to the transponder in accordance with the ID request by the EGI unit. At step S112, whether or not a response to the ID request transmitted at step S110 is received from the transponder is determined. If it is (YES at step S112), the process proceeds to step S114, whereas if it is not (NO at step S112), the process returns to the beginning of step S112. Thereafter the process proceeds to step S114 where the ID code transmitted from the transponder (other key) is stored in the RAM in the immobilizer unit. Then at step S116, the processes at the previous steps S104 to S114 are repeated once more, two ID codes stored in the RAM are compared. At step S118, whether or not the two ID codes stored in the RAM are identical to each other is determined. If they are (YES at step S118), the process proceeds to step S120, whereas if they are not (NO at step S118) the process goes to step S110. At step S120, the ID code stored in the RAM in the immobilizer unit is sent to the EGI unit. Thereafter at step S122, the EGI unit registers the ID code in the EEPROM and the immobilizer unit determines whether or not it received a response from the EGI unit indicating permission to write additionally is determined. If it has (YES at step S122), the process proceeds to step S123, whereas if it has not (NO at step S112), the process returns to the beginning of step S122. At step S123, the ID code stored in the RAM in the immobilizer unit is registered in the EEPROM. At step S124, whether or not a predetermined time period (e.g., about 5 seconds) has elapsed is determined. If it has (YES at step S124), the process returns to step S80 and the additional write process for another ID code is repeated or the ID code determination is performed. If the predetermined time period has not passed yet (NO at step S124), the process proceeds to step S126 where whether or not the ignition switch is off is determined. If it is (YES at step S126), the process returns to step S98, whereas if it is not (NO at step S126), the process returns to step S124.

### 〈Operational Sequence of an Additional Write Process in the EGI Unit〉

Next, an operational sequence of an additional write process in the EGI unit will be explained. Fig. 15 is a flowchart showing the operational sequence of the additional write process in the EGI unit. Note that steps of the additional write process in the EGI unit is the same as those at step S40 to S58 in the flowcharts in Figs. 6 and 7, thus explanation of those processes are omitted. At step S58 in Fig. 7, when the EGI unit received an additional write command (NO at step S58), the process proceeds to step S130 shown in Fig. 15. At step S130, the additional write process starts, and the EGI unit issues an ID request to the immobilizer unit. At step S132, whether or not a response to the ID request which is issued at step S130 is received from the immobilizer unit is determined. If it is (YES at step S132), the process proceeds to step S134, whereas if it is not (NO at step S132), the process returns to the beginning of step S132. At step S134, if there is an ID code, out of one or more ID codes received from the immobilizer unit, which is identical to the ID code registered in the EEPROM is determined. If there is (YES at step S134), the process proceeds to step S136, whereas if there is none (NO at step S134), the process goes to step S140 where the immobilizing function is set, and then the process returns to step S40 in Fig. 6. At step S136, a new ID code is registered in the EEPROM in the EGI unit. The new ID code at step S136 is that an ID code other than the codes which are identical to the codes registered in the EEPROM, which is judged at step S134. Thereafter at step S138, an additional write permission command for an ID code is sent to the immobilizer unit. Then the process goes to step S62 in Fig. 7, and the subsequent processes are the same as those explained with reference to Figs. 6 and 7.

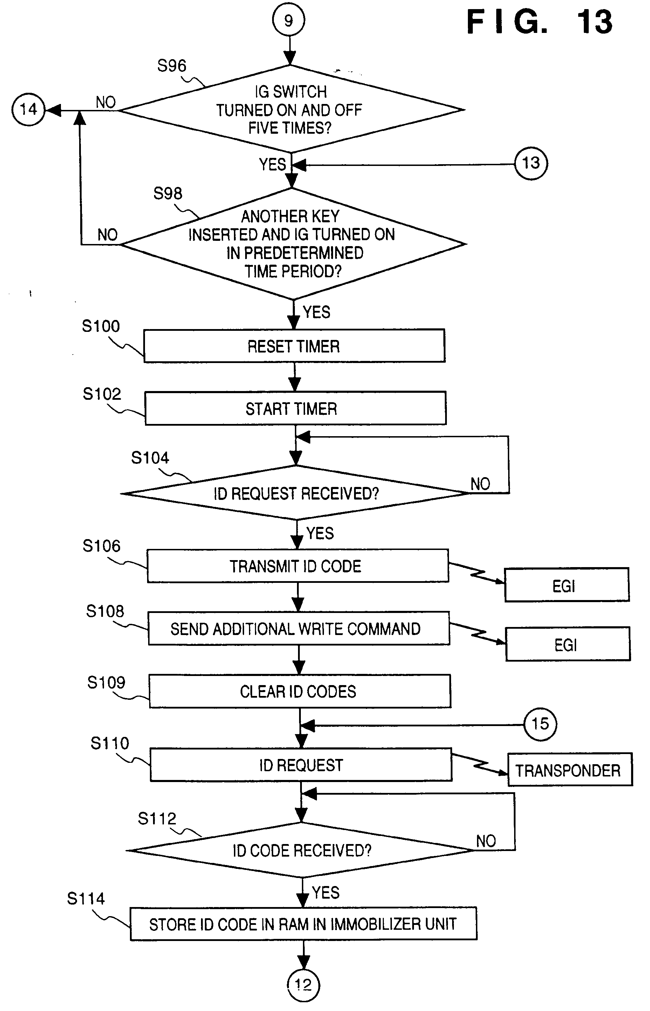

By performing the aforesaid operational sequence, ID codes are additionally written to the immobilizer unit and the EGI unit. It should be noted that the processes subsequent to step S50 in Fig. 6 and the processes subsequent to step S104 in Fig. 13 are synchronized between the units.

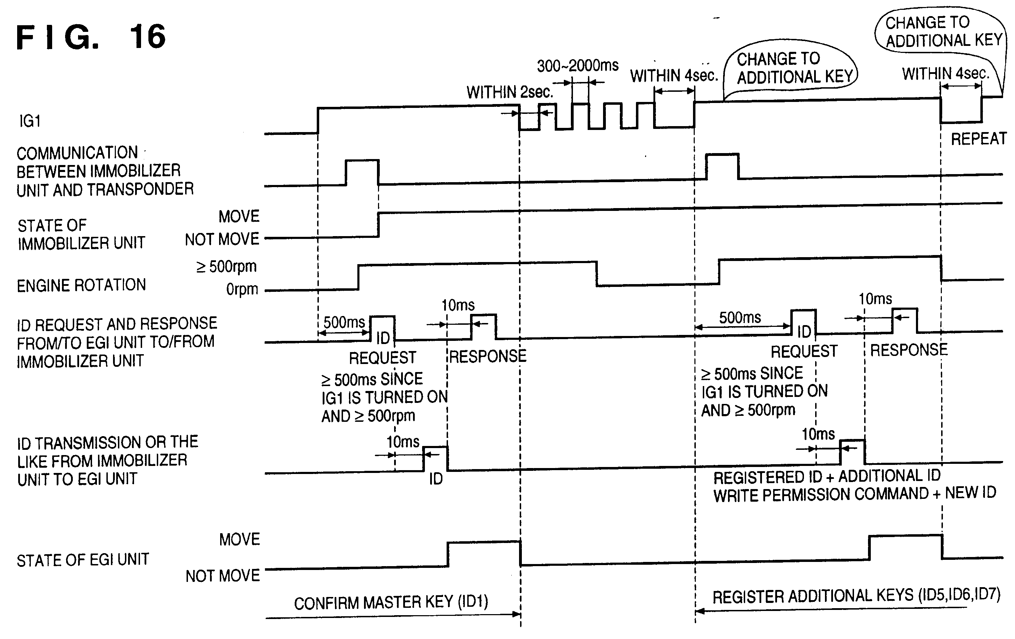

Fig. 16 is a timing chart of each operation in the transponder, the ignition switch, the immobilizer unit, and the EGI unit in the operation for adding keys (updating ID code, additionally writing). As shown in Fig. 16, timing of ON and OFF of the ignition switch described with reference to Figs. 12 to 14 is about 2 seconds. This ON and OFF operation is repeated five times and keys in the keyhole are changed in 4 seconds.

### (Effects of the Invention)

As described above, ID codes which is specific to each key are stored in the EEPROM only when the ID code stored in the RAMs in the immobilizer unit and the EGI unit satisfies predetermined conditions, thus setting of the codes specific to each key can be easily performed.

Further, after each unit of the anti-vehicle-thief apparatus of the present invention has been tested by using predetermined codes in an assembly factory, for instance, the codes can be easily changed to other specific codes at a dealer and the like.

Furthermore, since the additional write mode is provided, even if a key or keys are lost, by preparing new key or keys, deleting the ID code or codes of the lost key or keys, and registering new ID code or codes, it is possible to prevent a vehicle from being stolen the use of the lost key or keys.

The present invention is not limited to the above embodiment and various changes and modifications can be made within the spirit and scope of the present invention.

For example, the anti-vehicle-thief apparatus according to the above embodiment is realized by both of the immobilizer unit and the EGI unit. However, a system which performs ID code determination using either one of above units may be constructed. Further, the immobilizer unit and the EGI unit may be combined to form a single unit.

Further, in the above embodiment, the four ID codes are registered for the ID code determination and used for the additional write process, however the number of the ID code to be used is not limited to four.

Furthermore, predetermined time periods for the ID code determination and for setting to the changing mode can be arbitrary set.

## Claims

1. An anti-vehicle-thief apparatus comprising:
(a) a first code storage means (5) for storing a specific first code (ID1);
(b) a first key having a specific second code (ID1);
(c) a second key having a specific third code (ID2; ID5) which is different from said specific first and second codes;
(d) control means (4,8;9,13), said control means (4,8;9,13) including:
(d1) first detection means for detecting whether or not an ignition switch is turned on by using said first key;
(d2) code reading means for reading said specific second code from said first key when the ignition switch is turned on;
(d3) first code comparison means for comparing said specific first code stored in said first code storage means (5) with said specific second code read by said code reading means;
(d4) first determination means for determining whether said first key is valid where said specific second code is identical to said specific first code, or invalid where said specific second code is not identical to said specific first code;
(d5) second detection means for detecting whether or not the ignition switch is turned on and off a predetermined plurality of times by using said first key which is valid; and
(d6) first code registration means for registering said specific third code (ID2; ID5) with said first code storage means (5) when the ignition switch is turned on by using said second key after detecting that the ignition switch is turned on and off the predetermined plurality of times by using said first key; and
(e) a third key having a specific fourth code (ID3; ID6) which is different from said specific first, second, and third codes,
wherein said first detection means detects whether or not the ignition switch is turned on by using said third key within a predetermined time period after said specific third code has been registered and said second key is pulled out of the ignition switch,
and wherein said first code registration means registers said specific fourth code (ID3; ID6) if the ignition switch is turned on by using said third key within the predetermined time period.

2. The anti-vehicle-thief apparatus according to claim 1 further comprising engine control means (9) for causing an engine to stop when said first determination means determines that said first key is invalid.

3. The anti-vehicle-thief apparatus according to claim 2, wherein said engine control means (9) includes second code storage means (10) for storing said specific first code (ID1), and second code comparison means (13) for comparing said specific first code (ID1) with said specific second code (ID1).

4. The anti-vehicle-thief apparatus according to claim 3, wherein said specific third code (ID2; ID5) is registered with said first and second code storage means (5, 10) simultaneously.

5. The anti-vehicle-thief apparatus according to claim 4, wherein said first code registration means is performed if the ignition switch is turned on by using said second key within the predetermined time period after detecting that the ignition switch is turned on and off the predetermined plurality of times.

6. The anti-vehicle-thief apparatus according to claim 4, wherein said second code storage means (10) clears the other codes which have been already registered, except for said specific first code (ID1), when said first detection means detects that the ignition switch is turned on and off the predetermined plurality of times.

7. The anti-vehicle-thief apparatus according to claim 4, wherein said specific third code (ID2; ID5) is transmitted to said engine control means (9) and registered with said second code storage means (10).

8. The anti-vehicle-thief apparatus according to claim 1, wherein said first code storage means (5) clears the other codes which have been already registered, except for said specific first code (ID1), when said first detection means detects that the ignition switch is turned on and off the predetermined plurality of times.

9. The anti-vehicle-thief apparatus according to claim 1 further comprising code registration prohibition means for prohibiting code registration by said code registration means if the ignition switch is not turned on by using said second key within a predetermined time period after detecting that the ignition switch is turned on and off the predetermined plurality of times.

10. The anti-vehicle-thief apparatus according to claim 1, wherein said code reading means reads said specific second code (ID1) a plurality of times, and said first determination means checks whether or not specific second codes (ID2; ID5) read by said code reading means the plurality of times are identical with each other, and prohibits code registration by said code registration means if specific second codes read by said code reading means are not identical with each other.

11. The anti-vehicle-thief apparatus according to claim 1 further comprising engine revolution detection means for detecting engine revolution, voltage detection means for detecting voltage of power supply, and means for prohibiting code registration by said code registration means when the engine revolution and the voltage is lower than a predetermined value.

12. An anti-vehicle-thief apparatus according to at least one of the preceding claims further comprising:
(a) said first code storage means (5) for storing said specific first code (ID1) referring to said first key, having a first state in which said specific first code (ID1) is stored and a second state in which said specific first code (ID1) is not stored;
(b) third detection means for detecting said specific second code (ID1) of said first key;
(c) fourth detection means for detecting whether said first code storage means (5) is the first state or the second state;
(d) second code registration means for registering said specific second code (ID1) with said first code storage means (5) if said first code storage means (5) is the second state;
(e) second code comparison means for comparing said specific first code (ID1) with said specific second code (ID1) when said first code storage means (5) is the first state; and
(f) second determination means for determining whether said first key is valid where said specific second code (ID1) is identical to said specific first code (ID1), or invalid where said specific second code is not identical to said specific first code.

13. The anti-vehicle-thief apparatus according to claim 12, wherein said third detection means reads said specific second code (ID1) a plurality of times, and said first determination means checks whether or not specific second code (ID1) read by said third detection means the plurality of times are identical with each other, and prohibits code registration by said second code registration means if specific second code read by said third detection means are not identical with each other.

14. The anti-vehicle-thief apparatus according to claim 13 further comprising engine control means (9) for causing an engine to stop when said first determination means determines that said first key is invalid.

15. The anti-vehicle-thief apparatus according to claim 14, wherein said engine control means (9) includes third code storage means (10) for storing said specific first code (ID1), and third code comparison means for comparing said specific first code (ID1) with said specific second code (ID1).

16. The anti-vehicle-thief apparatus according to claim 15, wherein said engine control means (9) includes third code registration means for registering said specific second code (ID1) with said third code storage means (10) if said third code storage means (10) is the second state.

17. The anti-vehicle-thief apparatus according to claim 16, wherein said engine control means (9) includes fifth detection means for detecting said specific second code (ID1) a plurality of times, and third determination means for determining that said first key (ID1) is valid when said specific second code (ID1) is identical to said specific first code (ID1), and that said first key is invalid when said specific second code is not identical to said specific first code,
wherein said third determination means checks whether or not specific second code read by said fifth detection means (13) the plurality of times are identical with each other, and prohibits code registration by said third code registration means if specific second code read by said fifth detection means (13) are not identical with each other.

18. The anti-vehicle-thief apparatus according to claim 16, wherein said specific second code (ID1) is transmitted to said engine control means (9) and registered to said third code storage means (10).

19. The anti-vehicle-thief apparatus according to claim 14 further comprising engine revolution detection means for detecting engine revolution, voltage detection means for detecting voltage of power supply, and means for prohibiting code registration by said first code registration means if the engine revolution and the voltage is lower than a predetermined value.

20. The anti-vehicle-thief apparatus according to claim 12, wherein said first state is a non-initial state and said second state is an initial state.

21. A code setting method of anti-vehicle-thief apparatus according to claim 1, comprising the steps of:
(a) a first detection step of detecting whether or not the ignition switch is turned on by using a first key having a specific second code (ID1) (step 80);
(b) a comparison step of comparing a specific first code stored in first code storage means (5) with said specific second code read by code reading means (step94);
(c) a second detection step of detecting whether or not the ignition switch is turned on and off a predetermined plurality of times by using said first key (step96);
(d) a third detection step of detecting whether or not the ignition switch is turned on by using a second key having a specific third code (ID2;ID5) after detecting that the ignition switch is turned on and off the predetermined plurality of times by using said first key (step98);
(e) a first registration step of registering said specific third code with said first code storage means (5) when the ignition switch is turned on by using said second key after detecting that the ignition switch is turned on and off the predetermined plurality of times by using said first key (step123);
(f) a fourth detection step of detecting whether or not the ignition switch is turned on by using a third key having a specific fourth code ID3;ID6) within a predetermined time period after said specific third code has been registered and said second key is pulled out of the ignition switch (step 124); and
(g) a second registration step of registering said specific fourth code if the ignition switch is turned on by using said third key within the predetermined time period (step 136).

22. The code setting method according to claim 21, wherein the anti-vehicle-thief apparatus includes engine control means (9) for causing an engine to stop when said determination means determines that said first key is invalid, and wherein said engine control means includes second code storage means (10) for storing said specific first code; and second code comparison means (13) for comparing said specific first code with said specific second code;
wherein in said first registration step said specific third code is registered with said first and second code storage means (5, 10) simultaneously.

23. The code setting method according to claim 22, wherein said specific third code is registered if the ignition switch is turned on by using said second key within a predetermined time period after detecting that an ignition switch is turned on and off the predetermined plurality of times.

24. The code setting method according to claim 22 further comprising a code clear step of clearing the other codes which have been already registered, except for said specific first code, when said first detection means detects that the ignition switch is turned on and off the predetermined plurality of times.

25. The code setting method according to claim 22, wherein said specific third code is transmitted to said engine control means (9) and registered with said second code storage means (10).

26. The code setting method according to claim 21 further comprising a code clear step of clearing the other codes which have been already registered, except for said specific first code, when said first detection means detects that the ignition switch is turned on and off the predetermined plurality of times.

27. The code setting method according to claim 21 further comprising code registration prohibition step of prohibiting code registration at said registration step if the ignition switch is not turned on by using said second key within a predetermined time period after detecting that the ignition switch is turned on and off the predetermined plurality of times at the second detection step.

28. The code setting method according to claim 21, wherein said code reading means reads said specific second code a plurality of times, and said third detection step includes a step of checking whether or not specific second code read by said code reading means the plurality of times are identical with each other, and prohibiting code registration at said registration step if specific second codes read by said code reading means are not identical with each other.

29. The code setting method according to claim 21 further comprising engine revolution, voltage detection step of detecting voltage of power supply, wherein, at said code registration prohibition step, and a step of prohibiting code registration when the engine revolution and the voltage is lower than a predetermined value.

## Patentansprüche

1. Diebstahlschutzeinrichtung mit:
(a) einer ersten Code-Speichereinrichtung (5) zum Abspeichern eines spezifischen ersten Codes (ID1);
(b) einem ersten Schlüssel mit einem spezifischen zweiten Code (ID1);
(c) einem zweiten Schlüssel mit einem spezifischen dritten Code (ID2; ID5), der sich von den spezifischen ersten und zweiten Codes unterscheidet;
(d) einer Steuereinrichtung (4, 8; 9, 13), wobei die Steuereinrichtung (4, 8; 9, 13) aufweist:
(d1) eine erste Erfassungseinrichtung zur Erfassung, ob ein Zündschalter unter Verwendung des ersten Schlüssels angeschaltet ist;
(d2) eine Code-Leseeinrichtung zum Auslesen des spezifischen zweiten Codes aus dem ersten Schlüssel, wenn der Zündschalter angeschaltet ist;
(d3) eine erste Code-Vergleichseinrichtung zum Vergleichen des spezifischen ersten Codes, der in der ersten Code-Speichereinrichtung (5) abgespeichert ist, mit dem spezifischen zweiten Code, welcher durch die Code-Leseeinrichtung ausgelesen ist;
(d4) eine erste Erkennungseinrichtung zur Erkennung, ob der erste Schlüssel gültig ist, wenn der spezifische zweite Code identisch mit dem spezifischen ersten Code ist, oder ungültig, wenn der spezifische zweite Code nicht identisch mit dem spezifischen ersten Code ist;
(d5) eine zweite Erfassungseinrichtung zur Erfassung, ob der Zündschlüssel mehrmals bis zum Erreichen einer vorbestimmten Anzahl von Schaltvorgängen an- und abgeschaltet worden ist unter Verwendung des ersten Schlüssels, der gültig ist; und
(d6) eine erste Code-Registrationseinrichtung zur Registrierung des spezifischen dritten Codes (ID2; ID5) mit der ersten Code-Speichereinrichtung (5), wenn der Zündschalter unter Verwendung des zweiten Schlüssels angeschaltet wird, nachdem erfaßt worden ist, daß der Zündschalter mehrfach bis zum Erreichen einer vorbestimmten Anzahl von Schaltvorgängen unter Verwendung des ersten Schlüssels an- und abgeschaltet wird; und
(e) einem dritten Schlüssel mit einem spezifischen vierten Code (ID3; ID6), der sich von dem spezifischen ersten, zweiten und dritten Code unterscheidet,
wobei die erste Erfassungseinrichtung erfaßt, ob der Zündschalter unter Verwendung des dritten Schlüssels innerhalb einer vorbestimmten Zeitdauer angeschaltet wird, nachdem der spezifische dritte Code registriert worden ist und der zweite Schlüssel aus dem Zündschalter herausgezogen wird, und
wobei die Code-Registrationseinrichtung den spezifischen vierten Code (ID3; ID6) registriert, falls der Zündschalter unter Verwendung des dritten Schlüssels innerhalb der vorbestimmten Zeitdauer angeschaltet wird.

2. Diebstahlschutzsicherung nach Anspruch 1, welche ferner eine Motorsteuereinrichtung (9) aufweist, die den Stopp eines Motors veranlaßt, wenn die erste Erkennungseinrichtung erkennt, daß der erste Schlüssel ungültig ist.

3. Diebstahlschutzsicherung nach Anspruch 2, bei der die Motorsteuereinrichtung (9) eine zweite Code-Speichereinrichtung (10) zum Abspeichern des spezifischen ersten Codes (ID1) und eine zweite Code-Vergleichseinrichtung (13) zum Vergleichen des spezifischen ersten Codes (ID1) mit dem spezifischen zweiten Code (ID1) aufweist.

4. Diebstahlschutzeinrichtung nach Anspruch 3, bei der der spezifische dritte Code (ID2; ID5) gleichzeitig in der ersten und zweiten Code-Speichereinrichtung (5, 10) registriert wird.

5. Diebstahlschutzeinrichtung nach Anspruch 4, bei der die erste Code-Registrationseinrichtung aktiviert wird, falls der Zündschalter unter Verwendung des zweiten Schlüssels innerhalb einer vorbestimmten Zeitdauer nach dem Erfassen angeschaltet wird, daß der Zündschalter mehrfach bis zum Erreichen einer vorbestimmten Anzahl von Schaltvorgängen an- und ausgeschaltet worden ist.

6. Diebstahlschutzeinrichtung nach Anspruch 4, bei dem die zweite Code-Speichereinrichtung (10) die weiteren Codes, die bereits registriert worden sind, mit Ausnahme des spezifischen ersten Codes (ID1) löscht, wenn die erste Erfassungseinrichtung erfaßt, daß der Zündschalter mehrfach bis zum Erreichen einer vorbestimmten Anzahl von Schaltvorgängen an- und ausgeschaltet worden ist.

7. Diebstahlschutzeinrichtung nach Anspruch 4, bei der der spezifische dritte Code (ID2; ID5) zu der Motorsteuereinrichtung (9) übertragen wird und in der zweiten Code-Speichereinrichtung (10) registriert wird.

8. Diebstahlschutzeinrichtung nach Anspruch 1, bei der die erste Code-Speichereinrichtung (5) die anderen Codes, die bereits registriert worden sind, mit Ausnahme des spezifischen ersten Codes (ID1) löscht, wenn die erste Erfassungseinrichtung erfaßt, daß der Zündschalter mehrfach bis zum Erreichen einer vorbestimmten Anzahl von Schaltvorgängen an- und abgeschaltet worden ist.

9. Diebstahlschutzeinrichtung nach Anspruch 1, die ferner eine Code-Registrationssperreinrichtung zum Sperren der Code-Registration durch die Code-Registrationseinrichtung aufweist, falls der Zündschalter nicht unter Verwendung des zweiten Schlüssels innerhalb einer vorbestimmten Zeitdauer angeschaltet wird, nachdem erfaßt wird, daß der Zündschalter mehrfach an- und ausgeschaltet wird, bis eine vorbestimmte Anzahl von Schaltvorgängen erreicht ist.

10. Diebstahlschutzeinrichtung nach Anspruch 1, bei der die Code-Leseeinrichtung den spezifischen zweiten Code (ID1) mehrfach ausliest und die erste Erkennungseinrichtung überprüft, ob spezifische zweite Codes (ID2; ID5), die durch die Code-Leseeinrichtung für die vorbestimmte Anzahl von Malen ausgelesen wird, miteinander identisch sind, und die Code-Registration durch die Code-Registrationseinrichtung sperrt, falls die spezifischen zweiten Codes, welche durch die Code-Leseeinrichtung ausgelesen werden, nicht miteinander identisch sind.

11. Diebstahlschutzeinrichtung nach Anspruch 1, welche ferner eine Motordrehzahl-Erfassungseinrichtung zur Erfassung der Motordrehung, eine Spannungserfassungseinrichtung zur Erfassung der Spannung der Stromversorgung und eine Einrichtung zum Sperren der Code-Registration durch die Code-Registrationseinrichtung enthält, wenn die Motordrehzahl und die Spannung niedriger ist als ein vorbestimmter Wert.

12. Diebstahlschutzeinrichtung nach einem der vorangehenden Ansprüche, welche ferner aufweist:
(a) eine erste Code-Speichereinrichtung (5) zum Abspeichern des spezifischen ersten Codes (ID1), welcher zu dem ersten Schlüssel gehört, mit einem ersten Zustand, bei dem der spezifische erste Code (ID1) abgespeichert ist, und einem zweiten Zustand, bei dem der spezifische erste Code (ID1) nicht abgespeichert wird;
(b) eine dritte Erfassungseinrichtung zur Erfassung des spezifischen zweiten Codes (ID1) des ersten Schlüssels;
(c) eine vierte Erfassungseinrichtung zur Erfassung, ob die erste Code-Speichereinrichtung (5) sich in dem ersten oder in dem zweiten Zustand befindet;
(d) eine zweite Code-Registrationseinrichtung zur Registrierung des spezifischen zweiten Codes (ID1) mit der ersten Code-Speichereinrichtung (5), falls die erste Code-Speichereinrichtung (5) sich in dem zweiten Zustand befindet;
(e) eine zweite Code-Vergleichseinrichtung zum Vergleichen des spezifischen ersten Codes (ID1) und des spezifischen zweiten Codes (ID1), wenn die erste Code-Speichereinrichtung (5) sich in dem ersten Zustand befindet; und
(f) eine zweite Erkennungseinrichtung zum Erkennen, ob der erste Schlüssel gültig ist, wenn der spezifische zweite Code (ID1) identisch mit dem spezifischen ersten Code (ID1) ist, oder ungültig ist, wenn der spezifische zweite Code nicht identisch ist mit dem spezifischen ersten Code.

13. Diebstahlschutzeinrichtung nach Anspruch 1, bei der die dritte Erfassungseinrichtung den spezifischen zweiten Code (ID1) mehrfach ausliest und die erste Erkennungseinrichtung überprüft, ob der spezifische zweite Code (ID1), welcher durch die dritte Erfassungseinrichtung für die vorbestimmte Anzahl von Malen ausgelesen wird, und die Code-Registration durch die zweite Code-Registrationseinrichtung gesperrt wird, falls der spezifische zweite Code, der durch die dritte Erfassungseinrichtung ausgelesen wird, nicht identisch ist.

14. Diebstahlschutzeinrichtung nach Anspruch 13, welche ferner eine Motorsteuereinrichtung (9) aufweist, die einen Stopp des Motors veranlaßt, wenn die erste Erkennungseinrichtung erkennt, daß der erste Schlüssel ungültig ist.

15. Diebstahlschutzeinrichtung nach Anspruch 14, bei der die Motorsteuereinrichtung (9) eine dritte Code-Speichereinrichtung (10) zum Abspeichern des spezifischen ersten Codes (ID1) und eine dritte Code-Vergleichseinrichtung zum Vergleichen des spezifischen ersten Codes (ID1) mit dem spezifischen zweiten Code (ID1) aufweist.

16. Diebstahlschutzeinrichtung nach Anspruch 15, bei der die Motorsteuereinrichtung (9) eine dritte Code-Registrationseinrichtung zur Registration des spezifischen zweiten Codes (ID1) mit der dritten Code-Speichereinrichtung (10) enthält, falls die dritte Code-Speichereinrichtung (10) sich in dem zweiten Zustand befindet.

17. Diebstahlschutzeinrichtung nach Anspruch 16, bei der die Motorsteuereinrichtung (9) eine fünfte Erfassungseinrichtung zur mehrfachen Erfassung des spezifischen zweiten Codes (ID1) und eine dritte Erkennungseinrichtung zum Erkennen, daß der erste Schlüssel (ID1) gültig ist, enthält, wenn der spezifische zweite Code (ID1) identisch mit dem spezifischen ersten Code (ID1) ist, und zum Erkennen, daß der erste Schlüssel ungültig ist, wenn der spezifische zweite Code nicht identisch ist mit dem spezifischen ersten Code, wobei
die dritte Erkennungseinrichtung überprüft, ob der durch die fünfte Erfassungseinrichtung (13) mehrfach gelesene spezifische zweite Code miteinander identisch ist, und die Code-Registration durch die dritte Code-Registrationseinrichtung sperrt, falls der spezifische zweite Code, welcher durch die fünfte Erfassungseinrichtung (13) gelesen wird, nicht identisch ist.

18. Diebstahlschutzeinrichtung nach Anspruch 16, bei der der spezifische zweite Code (ID1) zu der Motorsteuereinrichtung (9) übertragen wird und in der dritten Code-Speichereinrichtung (10) registriert wird.

19. Diebstahlschutzeinrichtung nach Anspruch 14, welche ferner eine Motordrehzahl-Erkennungseinrichtung zur Erfassung der Motordrehzahl, eine Spannungserfassungseinrichtung zur Erfassung der Spannung der Stromversorgung sowie eine Einrichtung zum Sperren der Code-Registration durch die erste Code-Registrationseinrichtung aufweist, falls die Motordrehzahl und die Spannung niedriger ist als ein vorbestimmter Wert.

20. Diebstahlschutzeinrichtung nach Anspruch 12, bei der der erste Zustand ein Nicht-Initialzustand ist und der zweite Zustand ein Initialzustand ist.

21. Ein Code-Einstellverfahren für eine Diebstahlschutzeinrichtung gemäß Anspruch 1 mit den folgenden Schritten:
(a) einem ersten Erfassungsschritt, bei dem erfaßt wird, ob der Zündschalter unter Verwendung eines ersten Schlüssels mit einem spezifischen zweiten Code (ID1) (Schritt 80) angeschaltet ist;
(b) einem Vergleichsschritt, bei dem ein spezifischer erster Code, welcher in einer ersten Speichereinrichtung (5) abgespeichert ist, mit dem spezifischen zweiten Code, der durch die Code-Leseeinrichtung (Schritt 94) gelesen wird, verglichen wird;
(c) einem zweiten Erfassungsschritt zur Erfassung, ob der Zündschalter eine vorbestimmte Anzahl von Schaltvorgängen unter Verwendung des ersten Schlüssels (Schritt 96) an- und abgeschaltet wird;
(d) einem dritten Erfassungsschritt, bei dem erfaßt wird, ob der Zündschalter unter Verwendung eines zweiten Schlüssels mit einem spezifischen dritten Code (ID2; ID5) angeschaltet ist, nachdem erfaßt wird, daß der Zündschalter mehrfach für die vorbestimmte Anzahl von Schaltvorgängen unter Verwendung des ersten Schlüssels (Schritt 98) an- und ausgeschaltet wird;
(e) einem ersten Registrationsschritt zum Registrieren des spezifischen dritten Codes mit der ersten Code-Speichereinrichtung (5), wenn der Zündschalter unter Verwendung des zweiten Schlüssels angeschaltet wird, nachdem erfaßt wird, daß der Zündschalter mehrfach für eine vorbestimmte Anzahl von Schaltvorgängen unter Verwendung des ersten Schlüssels (Schritt S123) an- und ausgeschaltet wird;
(f) einem vierten Erfassungsschritt zur Erfassung, ob der Zündschalter unter Verwendung eines dritten Schlüssels mit einem spezifischen vierten Code (ID3; ID6) innerhalb einer vorbestimmten Zeitdauer angeschaltet wird, nachdem der spezifische dritte Code registriert worden ist und der zweite Schlüssel aus dem Zündschalter (Schritt 124) herausgezogen worden ist; und
(g) einem zweiten Registrationsschritt, bei dem der spezifische vierte Code registriert wird, falls der Zündschalter unter Verwendung des dritten Schlüssels innerhalb der vorbestimmten Zeitdauer (Schritt 136) angeschaltet wird.

22. Code-Einstellverfahren nach Anspruch 21, bei dem die Diebstahlschutzeinrichtung eine Motorsteuereinrichtung (9) enthält, welche einen Motorstopp veranlaßt, wenn die Erkennungseinrichtung erkennt, daß der erste Schlüssel ungültig ist, und wobei die Motorsteuereinrichtung eine zweite Code-Speichereinrichtung (10) zum Abspeichern des spezifischen ersten Codes enthält; und eine zweite Code-Vergleichseinrichtung (13) zum Vergleichen des spezifischen ersten Codes mit dem spezifischen zweiten Code; wobei in dem ersten Registrationsschritt der spezifische dritte Code mit der ersten und zweiten Code-Speicherein richtung (5, 10) registriert wird.

23. Code-Einstellverfahren nach Anspruch 22, bei dem der spezifische dritte Code registriert wird, falls der Zündschalter unter Verwendung des zweiten Schlüssels innerhalb einer vorbestimmten Zeitdauer angeschaltet wird, nachdem erfaßt wird, daß ein Zündschalter für die vorbestimmte Anzahl von Schaltvorgängen an- und ausgeschaltet wird.

24. Code-Einstellverfahren nach Anspruch 22, welches ferner einen Code-Löschungsschritt zum Löschen der weiteren Codes, die bereits registriert worden sind, mit Ausnahme des spezifischen ersten Codes enthält, wenn die erste Erfassungseinrichtung erfaßt, daß der Zündschalter für eine vorbestimmte Anzahl von Schaltvorgängen an- und ausgeschaltet worden ist.

25. Code-Einstellverfahren nach Anspruch 22, bei dem der spezifische dritte Code zu der Motorsteuereinrichtung (9) übertragen wird und mit der zweiten Code-Speichereinrichtung (10) registriert wird.

26. Code-Einstellverfahren nach Anspruch 21, welches ferner einen Code-Löschungsschritt zum Löschen der weiteren Codes, die bereits registriert worden sind, mit Ausnahme des spezifischen ersten Codes, enthält, wenn die erste Erfassungseinrichtung erfaßt, daß der Zündschalter eine vorbestimmte Anzahl von Schaltvorgängen an- und ausgeschaltet worden ist.

27. Code-Einstellverfahren nach Anspruch 21, welches ferner einen Code-Registrationssperrschritt zum Sperren der Code-Registration bei dem Registrationsschritt enthält, falls der Zündschalter nicht unter Verwendung des zweiten Schlüssels innerhalb einer vorbestimmten Zeitdauer angeschaltet wird, nachdem erfaßt wird, daß der Zündschalter für die vorbestimmte Anzahl von Schaltvorgängen bei dem zweiten Erfassungsschritt an- und ausgeschaltet worden ist.

28. Code-Einstellverfahren nach Anspruch 21, bei dem die Code-Leseeinrichtung den spezifischen zweiten Code mehrfach ausliest und der dritte Erfassungsschritt einen Schritt enthält, bei dem überprüft wird, ob der spezifische zweite Code, welcher durch die Code-Leseeinrichtung für die vorbestimmte Anzahl gelesen wird, jeweils identisch miteinander sind, und die Code-Registration bei dem Registrationsschritt gesperrt wird, falls die spezifischen zweiten Codes, die durch die Code-Leseeinrichtung ausgelesen werden, nicht miteinander identisch sind.

29. Code-Einstellverfahren nach Anspruch 21, welches ferner einen Motordrehzahl-Erfassungsschritt, einen Spannungserfassungsschritt, bei dem die Spannung der Stromversorgung erfaßt wird und bei dem Code-Registrationssperrschritt aufweist, und einen Schritt zum Sperren der Code-Registration, wenn die Motordrehzahl und die Spannung unterhalb eines vorbestimmten Wertes liegen.

## Revendications

1. Appareil anti-vol pour véhicule comprenant :
(a) un premier moyen (5) de stockage de code pour stocker un premier code spécifique (ID1);
(b) une première clé ayant un deuxième code spécifique (ID1);
(c) une deuxième clé ayant un troisième code spécifique (ID2 ; ID5) qui est différent desdits premier et deuxième codes spécifiques;
(d) un moyen de commande (4, 8 ; 9, 13), ledit moyen de commande (4, 8 ; 9, 13) comportant :
(d1) un premier moyen de détection pour détecter si un contacteur d'allumage est ou non mis en service par l'utilisation de ladite première clé;
(d2) un moyen de lecture de code pour lire ledit deuxième code spécifique en provenance de ladite première clé lorsque le contacteur d'allumage est mis en service;
(d3) un premier moyen de comparaison de code pour comparer ledit premier code spécifique stocké dans ledit premier moyen (5) de stockage de code avec ledit deuxième code spécifique lu par ledit moyen de lecture de code;
(d4) un premier moyen de détermination pour déterminer si ladite première clé est valide si ledit deuxième code spécifique est identique audit premier code spécifique, ou invalide si ledit deuxième code spécifique n'est pas identique audit premier code spécifique;
(d5) un deuxième moyen de détection pour détecter si le contacteur d'allumage est ou non mis et hors service une pluralité de fois prédéterminée en utilisant ladite première clé qui est valide; et
(d6) un premier moyen d'enregistrement de code pour enregistrer ledit troisième code spécifique (ID2; ID5) avec ledit premier moyen (5) de stockage de code lorsque le contacteur d'allumage est mis en service par l'utilisation de ladite deuxième clé après détection que le contacteur d'allumage est mis en et hors service la pluralité de fois prédéterminée en utilisant ladite première clé; et
(e) une troisième clé ayant un quatrième code spécifique (ID3 ; ID6) qui est différent desdits premier, deuxième et troisième codes spécifiques,
dans lequel ledit premier moyen de détection détecte si le contacteur d'allumage est ou non mis en service en utilisant ladite troisième clé dans un laps de temps prédéterminé après que ledit troisième code spécifique a été enregistré et que ladite deuxième clé a été retirée du contacteur d'allumage,
et dans lequel ledit premier moyen d'enregistrement de code enregistre ledit quatrième code spécifique (ID3 ; ID6) si le contacteur d'allumage est mis en service en utilisant ladite troisième clé dans le laps de temps prédéterminé.

2. Appareil anti-vol pour véhicule selon la revendication 1, comprenant en outre un moyen (9) de commande de moteur pour conduire un moteur à s'arrêter lorsque ledit premier moyen de détermination détermine que ladite première clé est invalide.

3. Appareil anti-vol pour véhicule selon la revendication 2, dans lequel ledit moyen (9) de commande de moteur comporte un deuxième moyen (10) de stockage de code pour stocker ledit premier code spécifique ((ID1), et un deuxième moyen (13) de comparaison de code pour comparer ledit premier code spécifique (ID1) avec ledit deuxième code spécifique (ID1).

4. Appareil anti-vol pour véhicule selon la revendication 3, dans lequel ledit troisième code spécifique (ID2 ; ID5) est enregistré avec lesdits premier et deuxième moyens (5, 10) de stockage de code, simultanément.

5. Appareil anti-vol pour véhicule selon la revendication 4, dans lequel ledit premier moyen d'enregistrement de code est mis en oeuvre si le contacteur d'allumage est mis en service en utilisant ladite deuxième clé dans le laps de temps prédéterminé après détection que le contacteur d'allumage est mis en et hors service la pluralité de fois prédéterminée.

6. Appareil anti-vol pour véhicule selon la revendication 4, dans lequel ledit deuxième moyen (10) de stockage de code efface les autres codes qui ont déjà été enregistrés, à l'exception dudit premier code spécifique (ID1), lorsque ledit premier moyen de détection détecte que le contacteur d'allumage est mis en et hors service la pluralité de fois prédéterminée.

7. Appareil anti-vol pour véhicule selon la revendication 4, dans lequel ledit troisième code spécfique (ID2 ; ID5) est transmis audit moyen (9) de commande de moteur et enregistré avec ledit deuxième moyen (10) de stockage de code.

8. Appareil anti-vol pour véhicule sleon la revendication 1, dans lequel ledit premier moyen (5) de stockage de code efface les autres codes qui ont déjà été enregistrés, à l'exception dudit premier code spécifique (ID1), lorsque ledit premier moyen de détection détecte que le contacteur d'allumage est mis en et hors service la pluralité de fois prédéterminée.

9. Appareil anti-vol pour véhicule selon la revendication 1, comprenant en outre un moyen d'empêchement d'enregistrement de code pour empêcher un enregistrement de code par ledit moyen d'enregistrement de code si le contacteur d'allumage n'est pas mis en service en utilisant ladite deuxième clé dans un laps de temps prédéterminé après détection que le contacteur d'allumage est mis en et hors service la pluralité de fois prédéterminée.

10. Appareil anti-vol pour véhicule selon la revendication 1, dans lequel ledit moyen de lecture de code lit ledit deuxième code spécifique (ID1) une pluralité de fois, et ledit premier moyen de détermination contrôle si des deuxièmes codes spécifiques (ID2 ; ID5) lus par ledit moyen de lecture de code la pluralité de fois sont ou non identiques les uns aux autres, et empêche un enregistrement de code par ledit moyen d'enregistrement de code si les deuxièmes codes spécifiques lus par ledit moyen de lecture de code ne sont pas identiques les uns aux autres.

11. Appareil anti-vol pour véhicule selon la revendication 1, comprenant en outre un moyen de détection de rotation de moteur pour détecter une rotation de moteur, un moyen de détection de tension pour détecter une tension de source d'alimentation, et un moyen pour empêcher un enregistrement de code par ledit moyen d'enregistrement de code lorsque la rotation du moteur et la tension sont inférieures à une valeur prédéterminée.

12. Appareil anti-vol pour véhicule selon au moins l'une des revendications précédentes, comprenant en outre :
(a) ledit premier moyen (5) de stockage de code pour stocker ledit premier code spécifique (ID1) se référant à ladite première clé, ayant un premier état dans lequel ledit premier code spécifique (ID1) est stocké et un deuxième état dans lequel ledit premier code spécifique (ID1) n'est pas stocké;
(b) un troisième moyen de détection pour détecter ledit deuxième code spécifique (ID1) de ladite première clé ;
(c) un quatrième moyen de détection pour détecter si ledit premier moyen (5) de stockage de code est dans le premier état ou le deuxième état;
(d) un deuxième moyen d'enregistrement de code pour enregistrer ledit deuxième code spécifique (ID1) avec ledit premier moyen (5) de stockage de code si ledit premier moyen (5) de stockage de code est dans le deuxième état;
(e) un deuxième moyen de comparaison de code pour comparer ledit premier code spécifique (ID1) avec ledit deuxième code spécifique (ID1) lorsque ledit premier moyen (5) de stockage de code est dans le premier état; et
(f) un deuxième moyen de détermination pour déterminer si ladite première clé est valide si ledit deuxième code spécifique (ID1) est identique audit premier code spécifique (ID1), ou invalide si ledit deuxième code spécifique n'est pas identique audit premier code spécifique.

13. Appareil anti-vol pour véhicule selon la revendication 12, dans lequel ledit troisième moyen de détection lit ledit deuxième code spécifique (ID1) une pluralité de fois, et ledit premier moyen de détermination contrôle si des deuxièmes codes spécifiques (ID1) lus par ledit troisième moyen de détection la pluralité de fois sont ou non identiques les uns aux autres, et empêche un enregistrement de code par ledit deuxième moyen d'enregistrement de code si lesdits deuxièmes codes spécifiques lus par ledit troisième moyen de détection ne sont pas identiques les uns aux autres.

14. Appareil anti-vol pour véhicule selon la revendication 13, comprenant en outre un moyen (9) de commande de moteur pour conduire un moteur à s'arrêter lorsque ledit premier moyen de détermination détermine que ladite première clé est invalide.

15. Appareil anti-vol pour véhicule selon la revendication 14, dans lequel ledit moyen (9) de commande de moteur comporte un troisième moyen (10) de stockage de code pour stocker ledit premier code spécifique (ID1), et un troisième moyen de comparaison de code pour comparer ledit premier code spécifique (ID1) avec ledit deuxième code spécifique (ID1).

16. Appareil anti-vol pour véhicule selon la revendication 15, dans lequel ledit moyen (9) de commande de moteur comporte un troisième moyen d'enregistrement de code pour enregistrer ledit deuxième code spécifique (ID1) avec ledit troisième moyen (10) de stockage de code si ledit troisième moyen (10) de stockage de code est dans le deuxième état.

17. Appareil anti-vol pour véhicule selon la revendication 16, dans lequel ledit moyen (9) de commande de moteur comporte un cinquième moyen de détection pour détecter ledit deuxième code spécifique (ID1) une pluralité de fois, et un troisième moyen de détermination pour déterminer que ladite première clé (ID1) est valide lorsque ledit deuxième code spécifique (ID1) est identique audit premier code spécifique (ID1), et que ladite première clé est invalide lorsque ledit deuxième code spécifique n'est pas identique audit premier code spécifique,
dans lequel ledit troisième moyen de détermination contrôle si des deuxièmes codes spécifiques lus par ledit cinquième moyen de détection (13) la pluralité de fois sont identiques les uns aux autres, et empêche un enregistrement de code par ledit troisième moyen d'enregistrement de code si les deuxièmes codes spécifiques lus par ledit cinquième moyen de détection (13) ne sont pas identiques les uns aux autres.

18. Appareil anti-vol pour véhicule selon la revendication 16, dans lequel ledit deuxième code spécifique (ID1) est transmis audit moyen (9) de commande de moteur et enregistré au niveau dudit troisième moyen (10) de stockage de code.

19. Appareil anti-vol pour véhicule selon la revendication 14, comprenant en outre un moyen de détection de rotation de moteur pour détecter une rotation de moteur, un moyen de détection de tension pour détecter une tension de source d'alimentation, et un moyen pour empêcher un enregistrement de code par ledit premier moyen d'enregistrement de code si la rotation du moteur et la tension sont inférieures à une valeur prédéterminée.

20. Appareil anti-vol pour véhicule selon la revendication 12, dans lequel ledit premier état est un état non initial et ledit deuxième état est un état initial.

21. Procédé d'établissement de code d'appareil anti-vol pour véhicule selon la revendication 1, comprenant les étapes suivantes;
(a) une première étape de détection du fait que le contacteur d'allumage est ou non mis en service en utilisant une première clé ayant un deuxième code spécifique (ID1) (étape 80);
(b) une étape de comparaison d'un premier code spécifique stocké dans un premier moyen (5) de stockage de code avec ledit deuxième code spécifique lu par un moyen de lecture de code (étape 94);
(c) une deuxième étape de détection du fait que le contacteur d'allumage est ou non mis en et hors service une pluralité de fois prédéterminée en utilisant ladite première clé (étape 96);
(d) une troisième étape de détection du fait que le contacteur d'allumage est ou non mis en service en utilisant une deuxième clé ayant un troisième code spécifique (ID2 ; ID5) après détection que le contacteur d'allumage est mis en et hors service la pluralité de fois prédéterminée en utilisant ladite première clé (étape 98);
(e) une première étape d'enregistrement dudit troisième code spécifique avec ledit premier moyen (5) de stockage de code lorsque le contacteur d'allumage est mis en service en utilisant ladite deuxième clé après détection que le contacteur d'allumage est mis en et hors service la pluralité de fois prédéterminée en utilisant ladite première clé (étape 123);
(f) une quatrième étape de détection du fait que le contacteur d'allumage est ou non mis en service en utilisant une troisième clé ayant un quatrième code spécifique (ID3 ; ID6) dans un laps de temps prédéterminé après que ledit troisième code spécifique a été enregistré et que ladite deuxième clé a été retirée du contacteur d'allumage (étape 124); et
(g) une deuxième étape d'enregistrement dudit quatrième code spécifique si le contacteur d'allumage est mis en service en utilisant ladite troisième clé dans le laps de temps prédéterminé (étape 136).

22. Procédé d'établissement de code selon la revendication 21, dans lequel l'appareil anti-vol pour véhicule comporte un moyen (8) de commande de moteur pour conduire un moteur à s'arrêter lorsque ledit moyen de détermination détermine que ladite première clé est invalide, et dans lequel ledit moyen de commande de moteur comporte un deuxième moyen (10) de stockage de code pour stocker ledit premier code spécifique; et un deuxième moyen (13) de comparaison de code pour comparer ledit premier code spécifique avec ledit deuxième code spécifique;
dans lequel, dans ladite première étape d'enregistrement, ledit troisième code spécifique est enregistré avec lesdits premier et deuxième moyens (5, 10) de stockage de code, simultanément.

23. Procédé d'établissement de code selon la revendication 22, dans lequel ledit troisième code spécifique est enregistré si le contacteur d'allumage est mis en service en utilisant ladite deuxième clé dans un laps de temps prédéterminé après détection qu'un contacteur d'allumage est mis en et hors service la pluralité de fois prédéterminée.

24. Procédé d'établissement de code selon la revendication 22, comprenant en outre une étape d'effacement de code pour effacer des autres codes qui ont déjà été enregistrés, à l'exception dudit premier code spécifique, lorsque ledit premier moyen de détection détecte que le contacteur d'allumage est mis en et hors service la pluralité de fois prédéterminée.

25. Procédé d'établissement de code selon la revendication 22, dans lequel ledit troisième code spécifique est transmis audit moyen (9) de commande de moteur et est enregistré avec ledit deuxième moyen (10) de stockage de code.

26. Procédé d'établissement de code selon la revendication 21, comprenant en outre une étape d'effacement de code pour effacer les autres codes qui ont déjà été enregistrés, à l'exception dudit premier code spécifique, lorsque ledit premier moyen de détection détecte que le contacteur d'allumage est mis en et hors service la pluralité de fois prédéterminée.

27. Procédé d'établissement de code selon la revendication 21, comprenant en outre une étape d'empêchement d'enregistrement de code pour empêcher un enregistrement de code à ladite étape d'enregistrement si le contacteur d'allumage n'est pas mis en service en utilisant ladite deuxième clé dans un laps de temps prédéterminé après détection que le contacteur d'allumage est mis en et hors service la pluralité de fois prédéterminée, à la deuxième étape de détection.

28. Procédé d'établissement de code selon la revendication 21, dans lequel ledit moyen de lecture de code lit ledit deuxième code spécifique une pluralité de fois, et ladite troisième étape de détection comporte une étape de contrôle du fait que des deuxièmes codes spécifiques lus par ledit moyen de lecture de code la pluralité de fois sont ou non identiques les uns aux autres, et empêchant un enregistrement de code à ladite étape d'enregistrement si des deuxièmes codes spécifiques lus par ledit moyen de lecture de code ne sont pas identiques les uns aux autres.

29. Procédé d'établissement de code selon la revendication 21, comprenant en outre une étape de détection de rotation de moteur et de tension pour détecter la tension d'une source d'alimentation, dans lequel, à ladite étape d'empêchement d'enregistrement de code, on empêche un enregistrement de code lorsque la rotation du moteur et la tension sont inférieures à une valeur prédéterminée.
